# EUROPEAN PATENT SPECIFICATION

(11) **EP 3 132 992 B1**
(45) Date of publication and mention of the grant of the patent: **07.06.2023**
(21) Application number: 15780147.3
(22) Date of filing: 16.04.2015
(51) Int. Cl.: B62B 9/00

(54) **DEVICE FOR PROVIDING ELECTRIC POWER TO A PRAM**
VORRICHTUNG ZUR BEREITSTELLUNG VON ELEKTRISCHEM STROM AN EINEN KINDERWAGEN
DISPOSITIF DE FOURNITURE D'ÉNERGIE ÉLECTRIQUE À UNE POUSSETTE POUR BÉBÉ

(30) Priority: 17.04.2014 ES 201430533
(43) Date of publication of application: 22.02.2017
(73) Proprietor: Heetee Baby Company Ltd., London SE8 5AE (GB); Garcia Gil, Samuel, 46009 Valencia (ES)
(72) Inventor: GARCIA GIL, Samuel, 46009 Valencia (ES)
(74) Representative: Elzaburu S.L.P.
(86) International application number: PCT/ES2015/070305
(87) International publication number: WO 2015/158947

(56) References cited:
- CN-A- 103 707 915
- CN-A- 103 707 915
- CN-U- 203 237 350
- CN-U- 203 268 108
- CN-U- 203 593 038
- CN-Y- 201 300 878
- DE-A1- 3 840 990
- DE-A1- 10 215 107
- DE-A1- 10 215 107
- GB-A- 2 345 596
- GB-A- 2 345 596
- GB-A- 2 499 654
- KR-A- 20090 039 294
- KR-A- 20110 012 963
- KR-A- 20120 133 265
- US-A1- 2014 069 606
- US-B1- 8 033 348

## Description

Document KR20110012963 shows a device for providing electric power to a pram via a gearbox.

### Object of the invention

The present invention relates to a device for providing electric power to a pram, so that based on the device it provides a pram, or baby seat, with an energy system that heats the pram seat, heats the feeding bottle, and provides USB connections and can charge different portable systems, such as smartphones, tablets, etc.

Optionally, the device is complemented with the incorporation of a small camera that takes images of the baby and is powered by means of the energy system. This option enables images of the baby and his/her surroundings to be accessed remotely.

### Description of the invention

To achieve the above mentioned object of invention, a device with the features of claim 1 is proposed. The device advocated can be formed from more than one gearbox that can be actuated from the shaft of the rear wheels of the corresponding pram. Thus, via two gearboxes that can be actuated by the shaft, located in a box in each wheel, when the pram moves using its wheels on the ground the electric generator starts and powers a battery that may be connected to the mains, to a motor vehicle power point or be powered by the generator or generators moved by the gearbox.

The battery powers a control board and a screen board governed by the control board and, via the control board, puts into operation a heating blanket for the baby's seat, a holder where the feeding bottle will be placed for the heating thereof and power charging outputs of electronic equipment, or in other words, USB outputs to charge, for example, smartphones, etc.

In this way, when the pram is moving, i.e. its wheels are turning due to movement on the ground, the generator or generators are actuated by the gearboxes actuated via the wheel shaft, so that via that generator it is possible to supply or charge a battery whereby the power supply is provided to the control boards and screen for heating of the seat blankets or blanket, the feeding bottle heating holder and the USB outputs, so that as has already been mentioned the battery can be powered directly from the mains, or via the generator or generators actuated by the gearbox, or even by a motor vehicle power point.

In short, it is a device that allows providing a pram with an energy system which is as self-sufficient as possible to achieve the following objectives:
- Heating of the baby seat, with several temperature levels and achieving, at all times, a comfortable temperature in different conditions.
- Heating of a feeding bottle to the desired temperature to feed the baby, for which purpose it includes a holder wherein the feeding bottle shall be positioned, that holder being provided to come into operation at the time the feeding bottle is placed in it, stopping after a certain time with the start and stop being automatic.
- USB connections to be able to charge different portable systems such as smartphones, tablets, etc.

Those objectives are achieved based on a battery which supplies all systems and is rechargeable, via a power point, the mains, by means of the generator or generators actuated by the gearbox or via a power point in a motor vehicle, which allows in this last case charging of the battery during a trip.

The control system that forms part of the device, via the user's control, will allow selecting activation of the different temperature levels, as well as informing the user of the operating conditions.

Optionally, it has been provided that the device incorporates a small camera associated with a GSM communications module or the like. This camera shall also be powered via the battery (5-5') and controlled by means of the control board (7) associated with the screen (8). Thus, it will be possible to remotely access the images obtained by the camera.

In this way, it is possible to monitor the environment of the child or baby remotely, for example, if he/she is left in the care of a third party, by means of any type of Internet connection, whether by mobile phone, computer, tablet, etc.

### Description of the drawings

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

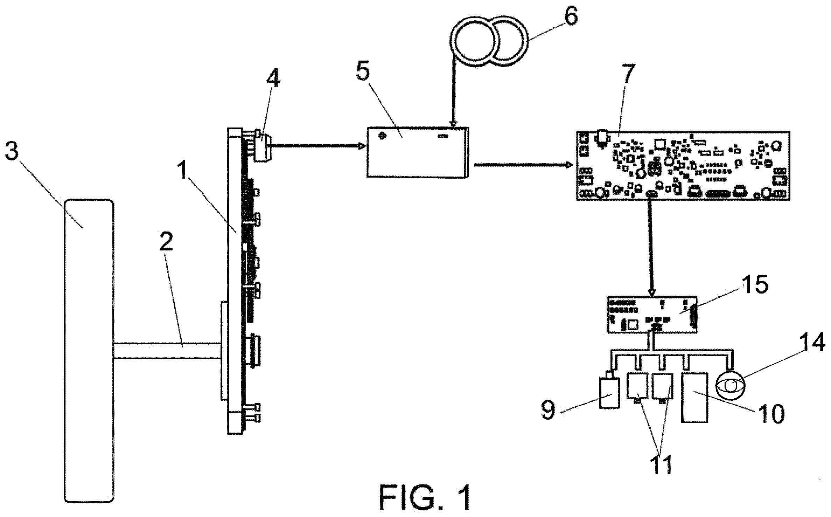

- Figure 1.: Shows a general and schematic representation of the device that is the object of the invention.

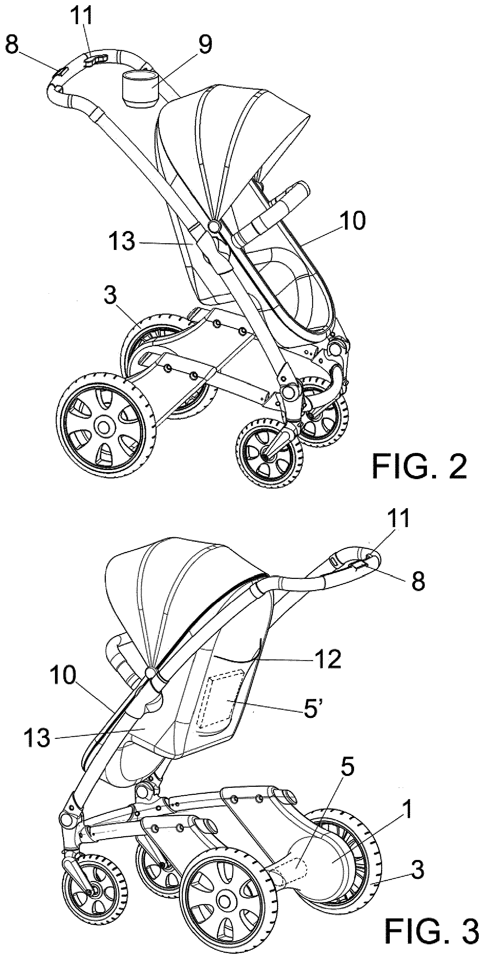

- Figure 2.: Shows a front-side perspective view of a pram in which the device of the invention can be implemented.
- Figure 3.: Finally, shows a rear-side view of the pram of the previous figure.

### Preferred embodiment of the invention

As can be seen in the stated figures, the device of the invention is formed from two gearboxes (1) which are actuated via the shaft (2) corresponding to the wheels (3) of the pram where it is applied, so that the movement of said pram and therefore the turning of the wheels (3), via the shaft (2) will actuate the system formed by the gearboxes (1) to put into operation one or more electric generators (4), wherethrough it is possible to power, or rather recharge a battery (5), which can be charged via the connection to the conventional mains connection (6) or even be charged via power point in a motor vehicle.

The device could even incorporate a second battery (5') housed in a pocket (12) of the buggy seat (13).

In any case, via the battery (5-5') a control board (7) associated with a screen (8) is powered, from which and via the appropriate means, it is possible to provide electric power to a holder for a feeding bottle (9) and heat it, to a connection (10) for a heatable blanket provided in the pram seat, and to power USB outputs (11).

The heating of the seat via the heating blanket can be regulated from a minimum to a maximum temperature, being gradually increased and, with the user being able to select the desired level via a push-button associated with the control circuit (7), all so that the heating of the blanket (10) is protected by a temperature probe, so that if the temperature of the blanket reached a set value, it would establish the power disconnection until the temperature value was below the set point, automatically connecting and disconnecting.

As regards the holder for heating the feeding bottles (9), it shall be formed by a receptacle wherein the feeding bottle to be heated shall be introduced, said holder being equipped with photocells that detect the position of the feeding bottle, so that when it is detected the system goes into operation to activate the heating system and start a control during a period of time considered as suitable so that the feeding bottle is hot, and once this time has been established or elapsed it automatically disconnects, it being necessary to remove the feeding bottle and reintroduce it in the event of wanting to heat it for a second time.

The device is complemented with LEDs that indicate the use of charging by the USB connectors (11), and a push-button for the selection of the heating intensity of the blanket (10), LEDs indicating heating and LEDs indicating the status of the battery (5) and an LED to indicate that the feeding bottle is being heated.

As previously mentioned, it has been provided so that, optionally, this device may incorporate a small camera (14), associated with a GSM communications module or the like, so that remotely, via a terminal such as a mobile phone, computer, tablet or the like, it is possible to access the images taken by the camera, and monitor the environment wherein the pram is found, for example, when it has been left in the charge of a third party. This camera is powered from the energy stored in the battery (5-5') and is controlled by means of the control board (7)
The camera (14) is connected to an auxiliary module for image processing and GSM connectivity, which is connected to the control circuit (8) for control via the corresponding cable, to obtain the necessary power supply for its operation.

The control circuit will be equipped with a small switch so that this module can be disconnected in order to increase the battery's useful life.

## Claims

1. Device for providing electric power to a pram with a wheel shaft (2), comprising at least one gearbox (1) that can be activated via turning the pram wheel shaft (2), as the pram moves on its wheels, a generator (4), at least one battery (5) and a control circuit board (7), whereby the generator (4) is connected to the at least one battery (5) and is actuated via said gearbox (1), whereby the generator (4) powers the control circuit board which is associated with a screen (8) for viewing system operation; an electric blanket (10) for heating the seat; **characterized in that** the control circuit board (7) is further associated with a holder (9) for heating a feeding bottle and USB output connectors (11) for charging mobile phones.

2. Device for providing electric power to a pram, according to claim 1, wherein the battery (5) or batteries may incorporate additional charging means such as mains connectors or motor vehicle power point.

3. Device for providing electric power to a pram, according to claim 1, wherein the control circuit (7) of the heating blanket of the seat includes different heating levels which can be selected by the user by means of a push-button.

4. Device for providing electric power to a pram, according to claim 1, wherein the holder (9) for heating the feeding bottle has photocells to detect the feeding bottle and start the heating device.

5. Device for providing electric power to a pram, according to preceding claims, wherein it includes LEDs that indicate of the use of the USB charging of the battery, a push-button for the selection of the heating intensity, LEDs indicating the heating level selected, LEDs indicating that the battery (5) is being charged, LEDs to indicate battery status and LEDs to indicate when the feeding bottle (9) is being heated.

6. Device for providing electric power to a pram, according to preceding claims, **characterised by** the control circuit (7) being associated with a small camera (14), connected to a GSM communications module or the like, whose images are accessible remotely.

## Patentansprüche

1. Vorrichtung zur Stromversorgung eines Kinderwagens mit einer Radwelle (2), umfassend mindestens ein Getriebe (1), das durch Drehen der Kinderwagenradwelle (2) aktiviert werden kann, während sich der Kinderwagen auf seinen Rädern bewegt, einen Generator (4), mindestens eine Batterie (5) und eine Steuerplatine (7), wobei der Generator (4) mit der mindestens einen Batterie (5) verbunden ist und über das Getriebe (1) betätigt wird, wobei der Generator (4) die Steuerplatine mit Strom versorgt, die mit einem Bildschirm (8) zur Anzeige des Systembetriebs verbunden ist; eine Heizdecke (10) zum Beheizen des Sitzes; **dadurch gekennzeichnet, dass** die Steuerplatine (7) außerdem mit einer Halterung (9) zum Beheizen einer Babyflasche und USB-Ausgangsanschlüssen (11) zum Laden von Mobiltelefonen verbunden ist.

2. Vorrichtung zur Stromversorgung eines Kinderwagens nach Anspruch 1, wobei die Batterie (5) oder die Batterien zusätzliche Lademittel wie Netzanschlüsse oder Kraftfahrzeugsteckdosen enthalten können.

3. Vorrichtung zur Stromversorgung eines Kinderwagens nach Anspruch 1, wobei die Steuerplatine (7) der Heizdecke des Sitzes verschiedene Heizstufen umfasst, die vom Benutzer mittels einer Drucktaste ausgewählt werden können.

4. Vorrichtung zur Stromversorgung eines Kinderwagens nach Anspruch 1, wobei die Halterung (9) zum Erwärmen der Babyflasche Fotozellen aufweist, um die Babyflasche zu erkennen und die Heizvorrichtung zu starten.

5. Vorrichtung zur Stromversorgung eines Kinderwagens nach einem der vorhergehenden Ansprüche, wobei sie LEDs enthält, die die Verwendung der USB-Ladung der Batterie anzeigen, eine Drucktaste zur Auswahl der Heizintensität, LEDs, die die gewählte Heizstufe anzeigen, LEDs, die anzeigen, dass die Batterie (5) geladen wird, LEDs, die den Batteriestatus anzeigen, und LEDs, die anzeigen, wenn die Babyflasche (9) erwärmt wird.

6. Vorrichtung zur Stromversorgung eines Kinderwagens nach einem der vorhergehenden Ansprüche, **dadurch gekennzeichnet, dass** die Steuerplatine (7) mit einer kleinen Kamera (14) verbunden ist, die mit einem GSM-Kommunikationsmodul oder dergleichen verbunden ist, auf deren Bilder aus der Ferne zugegriffen werden kann.

## Revendications

1. Dispositif pour fournir de l'énergie électrique à un landau avec un arbre de roue (2), comprenant au moins une boîte de vitesses (1) qui peut être activée en faisant tourner l'arbre de roue de landau (2), lorsque le landau se déplace sur ses roues, un générateur (4), au moins une batterie (5) et une carte de circuit imprimé de commande (7), le générateur (4) étant connecté à la au moins une batterie (5) et étant actionné par l'intermédiaire de ladite boîte de vitesses (1), le générateur (4) alimentant la carte de circuit imprimé de commande qui est associée à un écran (8) pour le fonctionnement du système de visualisation; un blanchet électrique (10) pour chauffer le siège; **caractérisé en ce que** la carte de circuit imprimé de commande (7) est en outre associée à un support (9) pour chauffer une bouteille d'alimentation et des connecteurs de sortie USB (11) pour charger des téléphones mobiles.

2. Dispositif pour fournir de l'énergie électrique à un landau, selon la revendication 1, dans lequel la batterie (5) ou les batteries peuvent incorporer des moyens de charge supplémentaires tels que des connecteurs secteur ou un point d'alimentation de véhicule automobile.

3. Dispositif d'alimentation électrique d'un landau selon la revendication 1, dans lequel le circuit de commande (7) du blanchet chauffant du siège comprend différents niveaux de chauffage qui peuvent être sélectionnés par l'utilisateur au moyen d'un bouton-poussoir.

4. Dispositif pour fournir de l'énergie électrique à un landau, selon la revendication 1, dans lequel le support (9) pour chauffer le biberon a des cellules photoélectriques pour détecter le biberon et démarrer le dispositif de chauffage.

5. Dispositif pour fournir de l'énergie électrique à un landau, selon les revendications précédentes, dans lequel il comprend des diodes électroluminescentes qui indiquent l'utilisation de la charge USB de la batterie, un bouton-poussoir pour la sélection de l'intensité de chauffage, des diodes électroluminescentes indiquant le niveau de chauffage sélectionné, des diodes électroluminescentes indiquant que la batterie (5) est en cours de charge, des diodes électroluminescentes pour indiquer l'état de la batterie et des diodes électroluminescentes pour indiquer quand la bouteille d'alimentation (9) est en cours de chauffage.

6. Dispositif pour fournir de l'énergie électrique à une poussette selon les revendications précédentes, **caractérisé en ce que** le circuit de commande (7) est associé à une petite caméra (14), reliée à un module de communication GSM ou similaire, dont les images sont accessibles à distance.
